# EUROPÄISCHE PATENTSCHRIFT

(11) **EP 2 905 158 B1**
(45) Veröffentlichungstag und Bekanntmachung des Hinweises auf die Patenterteilung: **06.06.2018**
(21) Anmeldenummer: 15164967.0
(22) Anmeldetag: 24.04.2015
(51) Int. Cl.: B60H 1/00, B01D 45/08, B60H 1/28, F24F 3/16

(54) **KRAFTFAHRZEUG MIT EINEM ALS WÄRMETAUSCHER AUSGEBILDETEN WASSERKASTEN**
MOTOR VEHICLE WITH A WATER BOX IN THE FORM OF A HEAT EXCHANGER
VÉHICULE AUTOMOBILE ÉQUIPÉ DE RÉSERVOIR D'EAU CONÇU COMME UN ÉCHANGEUR THERMIQUE

(43) Veröffentlichungstag der Anmeldung: 12.08.2015
(73) Patentinhaber: Weidplas GmbH, 8700 Küsnacht (CH)
(72) Erfinder: Harke, Stefan, 74889 Sinsheim (CH); Müller, Armin, 8722 Kaltbrunn (CH); Dal Vecchio, Piero, 8734 Ermenswil (CH)
(74) Vertreter: Rutz, Andrea

(56) Entgegenhaltungen:
- EP-A1- 2 660 084
- EP-A1- 2 752 317

## Beschreibung

### TECHNISCHES GEBIET

Die vorliegende Erfindung betrifft ein Kraftfahrzeug mit einem als Wärmetauscher ausgebildeten Wasserkasten, einen Wasserkasten für ein derartiges Kraftfahrzeug sowie ein Verfahren zur Temperierung eines solchen Kraftfahrzeugs.

### STAND DER TECHNIK

Zur Erwärmung bzw. Kühlung der Luft im Fahrgastraum wird bei Kraftfahrzeugen üblicherweise mittels eines Klimageräts Frischluft von aussen her angesaugt und dem Fahrgastraum zugeführt. Ein Klimagerät weist zumindest einen Verdampfer und/oder einen Heizer auf, mit welchem die Frischluft auf eine erwünschte Temperatur abgekühlt bzw. erwärmt werden kann. Zum Ansaugen der Luft kann es zudem ein Luftfördermittel, wie insbesondere einen Ventilator, mitumfassen.

Damit dem Klimagerät möglichst trockene und tropfenarme Frischluft zur Verfügung gestellt werden kann, ist in Kraftfahrzeugen meist ein Wasserkasten vorgesehen. Die Aufgabe des Wasserkastens besteht darin, Wasser aus der angesaugten Frischluft abzuscheiden, sodass möglichst wenig Wassertropfen in das Klimagerät gelangen. Wasser kann insbesondere bei Regen in Form von Schwallwasser oder in Form von Tröpfchen in der angesaugten Frischluft enthalten sein. Durch das Vorsehen eines Wasserkastens soll ein Absetzen von Wassertropfen im Luftfilter des Klimageräts, was einen unerwünschten Pilzbefall zur Folge haben kann, verhindert werden.

Die Temperierung, also die Erwärmung bzw. Abkühlung der angesaugten Luft im Klimagerät auf eine gewünschte Temperatur, erfordert jedoch eine bedeutende Menge an Energie. Bei Elektrofahrzeugen und Hybridfahrzeugen muss dazu elektrische Energie aus der Batterie bzw. dem Akkumulator bereitgestellt werden. Dies kann die gesamte Energiebilanz solcher Kraftfahrzeuge erheblich beeinträchtigen.

Um den Energieverbrauch bei der Temperierung des Fahrgastraums eines Kraftfahrzeugs zu senken, wird in der WO 2013/164260 A1 vorgeschlagen, den Wasserkasten als Wärmetauscher auszubilden mit einem Wärmetauschelement, zu welchem Abluft gezielt hingeleitet wird, um die thermische Energie der Abluft auf die den Wasserkasten durchströmende Frischluft zu übertragen. Die angesaugte Frischluft kann dadurch im Wasserkasten mittels der bereits temperierten Abluft vortemperiert werden und somit eine wesentliche Energieeinsparung beim Klimagerät erreicht werden. Weitere Energieeinsparungen wären jedoch wünschenswert. Die WO2013/164260 A1 und deren Familiendokument EP 2 660 084 B1 zeigen somit ein Kraftfahrzeug gemäß Oberbegriff des Anspruchs 1. In der EP 2 752 318 A1 wird vorgeschlagen, einen ersten Wasserkasten im Inneren eines zweiten Wasserkastens anzuordnen, um auch beim Ansaugen von grossen Luftmengen noch einen verhältnismässig geringen Druckabfall zu gewährleisten. Aufgrund des geringeren Druckabfalls kann der Energieverbrauch des Luftfördermittels gesenkt werden. In der US 2002/0164942 A1 ist ein Klimagerät offenbart, mit welchem zur Kühlung eines Fahrgastraums entweder Frischluft von aussen her oder Umluft von einem hinteren Bereich des Fahrgastraums ansaugbar ist. Mittels einer Klappensteuerung kann eine gewünschte Betriebsart gewählt werden.

### DARSTELLUNG DER ERFINDUNG

Es ist eine Aufgabe der vorliegenden Erfindung, den Energieverbrauch bei einem Fahrzeug mit einem als Wärmetauscher ausgebildeten Wasserkasten weiter zu senken. Zur Lösung dieser Aufgabe wird ein Kraftfahrzeug vorgeschlagen, wie es in Anspruch 1 angegeben ist. Ausserdem wird in Anspruch 10 ein Wasserkasten für ein derartiges Kraftfahrzeug sowie in Anspruch 14 ein Verfahren zur Temperierung eines Kraftfahrzeugs vorgeschlagen.

Vorteilhafte Ausgestaltungen der Erfindung sind in den abhängigen Ansprüchen angegeben.

Die vorliegende Erfindung stellt also ein Kraftfahrzeug gemäß Anspruch 1 zur Verfügung, aufweisend
einen Wasserkasten mit einem ersten Innenraum zum Abscheiden und Abführen von Wasser aus einem den ersten Innenraum durchströmenden ersten Luftstrom, wobei der Wasserkasten als Wärmetauscher ausgebildet ist, mit einem Wärmetauschelement, welches zur Übertragung von thermischer Energie zwischen dem ersten Luftstrom und einem zweiten Luftstrom dient; sowie
zumindest eine Leitstruktur, welche dazu dient, den zweiten Luftstrom gezielt zum Wärmetauschelement hin zu leiten.

Es ist zumindest ein Steuerelement vorgesehen, mit welchem die Übertragung der thermischen Energie zwischen dem ersten Luftstrom und dem zweiten Luftstrom in einem ersten Betriebszustand ermöglicht und in einem zweiten Betriebszustand zumindest teilweise, bevorzugt im Wesentlichen vollständig, bevorzugter vollständig, verhindert werden kann.

Das Steuerelement dient somit zum Umschalten vom ersten zum zweiten Betriebszustand bzw. umgekehrt. Die Wahl des Betriebszustandes erfolgt bevorzugt in Abhängigkeit der Temperaturen des ersten und des zweiten Luftstroms. Bevorzugter erfolgt die Wahl des Betriebszustandes in Abhängigkeit der Temperaturen der Aussenluft und der Fahrgastraumluft. Vorteilhaft sind daher Sensoren bzw. Thermometer zur Messung der Temperatur des ersten und des zweiten Luftstroms bzw. der Aussen- und der Innentemperatur vorgesehen.

Es wurde erkannt, dass sich der Fahrgastraum eines Kraftfahrzeugs insbesondere im Sommer und wenn das Kraftfahrzeug der Sonne ausgesetzt ist auf sehr hohe Temperaturen aufheizen kann, welche um bis zu 50°C oberhalb der Aussentemperatur liegen können. Indem nun bei solchen Fällen, insbesondere bei Fahrtantritt, der zweite Betriebszustand eingenommen und somit zumindest teilweise verhindert wird, dass eine Übertragung von thermischer Energie zwischen dem ersten und dem zweiten Luftstrom stattfindet, kann vermieden werden, dass die einströmende Frischluft, insbesondere vor dem Abkühlen durch einen allfälligen Verdampfer des Kraftfahrzeuges, welcher in einem allfälligen Klimagerät des Kraftfahrzeuges angeordnet ist, durch die überhitzte Innenraumluft des Fahrgastraums erwärmt wird. Der Verdampfer kann dadurch bei Fahrtantritt mit einer wesentlich geringeren Kühlleistung betrieben werden. Ausserdem kann dadurch die gewünschte Innentemperatur im Fahrgastraum schneller erreicht werden. Sobald die im Fahrgastraum vorliegende Innentemperatur kleiner oder gleich gross ist, wie die Aussentemperatur, kann mittels des Steuerelements der erste Betriebszustand eingenommen werden, in welchem der erste Luftstrom mit Hilfe des zweiten Luftstroms via das Wärmetauschelement vortemperiert wird.

Beim zweiten Luftstrom handelt es sich bevorzugt um Abluft, welche insbesondere aus dem Fahrgastraum des Kraftfahrzeugs angesogen wird. Der zweite Luftstrom muss nicht zwingend benutzt werden, um den ersten Luftstrom vorzukühlen, sondern kann selbstverständlich auch zum Vorheizen des ersten Luftstroms benutzt werden. Insbesondere in diesem Fall ist es auch möglich, für den zweiten Luftstrom zum Beispiel Abluft aus dem Motorenraum zu verwenden. Es würde dann in Abhängigkeit der im Motorenraum vorliegenden Innentemperatur zwischen dem ersten und dem zweiten Betriebszustand umgeschaltet.

Der Wasserkasten weist eine den ersten Innenraum begrenzende Wandung auf, sowie zumindest einen Lufteinlassöffnung, durch welche Luft, insbesondere Frischluft, in den ersten Innenraum einströmen kann, sowie zumindest eine Luftauslassöffnung, durch welche hindurch Luft aus dem ersten Innenraum ausströmen kann. Zum Abführen von Wasser aus dem ersten Innenraum weist der Wasserkasten bevorzugt zumindest eine Wasseraustrittsöffnung auf. Der Wasserkasten kann insbesondere gemäss einer der in der WO 2013/164260 A1 angegebenen Ausführungsformen ausgebildet sein. Das Wärmetauschelement bildet bevorzugt zumindest einen Teil der Wandung, welche den ersten Innenraum begrenzt. Bevorzugter bildet es sogar einen Grossteil dieser Wandung.

Bevorzugt weist das Wärmetauschelement eine Wandstärke von weniger als 1 mm, insbesondere von weniger als 0.5 mm, auf. Dadurch kann ein guter Wärmedurchgang des Wärmetauschelements unabhängig vom verwendeten Material erreicht werden. Alternativ oder zusätzlich dazu kann das Wärmetauschelement auch aus einem gut wärmeleitfähigen Material hergestellt sein, wie insbesondere Metall. Es kann aber auch aus einem Kunststoff, wie insbesondere Polypropylen, hergestellt sein. Falls das Wärmetauschelement aus Polypropylen (PP) hergestellt ist, weist es bevorzugt einen Anteil von 20 % Talkum auf. Bevorzugt wird ein Kunststoffmaterial mit einer besonders hohen Wärmeleitfähigkeit von grösser als 0.3 W/mK bestimmt nach EN ISO 22007-2: 2008 vorgesehen.

Um das Abscheiden von Wasser aus der einströmenden Frischluft zu verbessern, weist der Wasserkasten bevorzugt ein Umlenkelement auf, welches in den ersten Innenraum hineinragt und welches von der einströmenden Luft in vertikaler und/oder horizontaler Richtung umströmt wird.

Beim Steuerelement handelt es sich vorzugsweise um ein Absperrorgan, insbesondere ein Ventil, wie beispielsweise eine Absperrklappe oder ein Absperrschieber, mit welchem im zweiten Betriebszustand zumindest zum Teil, bevorzugt im Wesentlichen vollständig, bevorzugter vollständig, verhindert werden kann, dass der zweite Luftstrom zum Wärmetauschelement hingelangt. Das Absperrorgan kann somit die Ausbildung eines zweiten Luftstroms zumindest teilweise oder sogar vollständig verhindern, oder aber den zweiten Luftstrom so umlenken, dass er nur teilweise bzw. gar nicht zum Wärmetauschelement hin gelangt. Das Absperrorgan kann somit auch als Umlenkelement ausgebildet sein. Alternativ, aber weniger bevorzugt, kann das Steuerelement z.B. auch zur Umlenkung des ersten anstatt des zweiten Luftstroms dienen. Das Steuerelement kann beispielsweise aber auch als ein Luftfördermittel, wie zum Beispiel ein Ventilator, ausgebildet sein. Im Falle eines Luftfördermittels kann im zweiten Betriebszustand zum Teil verhindert werden, dass der zweite Luftstrom zum Wärmeaustauschelement gelangt, indem das Luftfördermittel zum Beispiel nicht oder nur schwach in Betrieb ist und dadurch einen hohen Strömungswiderstand generiert.

Das Kraftfahrzeug weist vorzugsweise eine Steuereinheit auf, welche derart zur Ansteuerung des Steuerelements ausgebildet ist, dass das Steuerelement im ersten Betriebszustand die Übertragung der thermischen Energie zwischen dem ersten Luftstrom und dem zweiten Luftstrom zulässt und im zweiten Betriebszustand zumindest teilweise verhindert. Die Steuereinheit umfasst beispielsweise einen Aktuator zum Bewegen des Steuerelementes, wie beispielsweise einen Motor oder einen Elektromagneten, sowie eine mit dem Aktuator verbundene Auswerteeinheit zur Steuerung des Aktuators, wie beispielsweise eine Platine. Mittels der Steuereinheit kann somit das Steuerelement wahlweise gemäss dem ersten oder dem zweiten Betriebszustand angesteuert werden. Dabei wird der erste Betriebszustand vorteilhaft dann eingenommen, wenn die Temperatur des zweiten Luftstroms kleiner oder gleich gross wie die Temperatur des ersten Luftstroms ist. Der zweite Betriebszustand wird vorteilhaft dann eingenommen, wenn die Temperatur des zweiten Luftstroms höher als diejenige des ersten Luftstroms ist. Noch vorteilhafter wird der erste Betriebszustand dann eingenommen, wenn eine im Fahrgastraum des Kraftfahrzeugs vorliegende Innentemperatur kleiner oder gleich gross wie eine ausserhalb des Kraftfahrzeugs vorliegende Aussentemperatur ist, und der zweite Betriebszustand wird dann eingenommen, wenn die Innentemperatur höher als die Aussentemperatur ist. Die Steuereinheit ist vorzugsweise dazu ausgebildet, das Steuerelement automatisch, das heisst, selbsttätig, entsprechend dem ersten bzw. dem zweiten Betriebszustand anzusteuern. Dazu ist die Steuereinheit bevorzugt mit entsprechenden Sensoren bzw. Thermometern verbunden. Auf diese Art und Weise kann eine optimale Energieeffizienz gewährleistet werden.

Nach einer Weiterbildung der Erfindung weist das Kraftfahrzeug wenigstens einen Verdampfer zum Abkühlen des ersten Luftstroms auf. Das Kraftfahrzeug weist ein Klimagerät auf, in welchem der Verdampfer angeordnet ist. Das Kraftfahrzeug weist bevorzugt ein Heizelement zum Erwärmen des ersten Luftstroms auf, welches vorzugweise in einem Klimagerät angeordnet ist. Bevorzugt strömt der erste Luftstrom zuerst zu einem Verdampfer, insbesondere zu einem Verdampfer welcher in einem Klimagerät angeordnet ist, und anschliessend in den Fahrgastraum.

Nach einer Weiterbildung der Erfindung weist das Kraftfahrzeug wenigstens ein Luftfördermittel, wie beispielsweise einen Ventilator, auf zur Generierung des ersten Luftstromes. Das Luftfördermittel ist bevorzugt in einem Klimagerät des Kraftfahrzeuges angeordnet. Erfindungsgemäß ist eine Verbindungsstruktur vorgesehen, um im zweiten Betriebszustand einen Zusatzfrischluftstrom, welcher ausserhalb des ersten Innenraumes strömt, bevorzugt welcher ausserhalb des ersten Innenraums strömt und mit dem Wärmetauschelement in Kontakt kommt, zum Klimagerät, hinzuleiten. Beim Zusatzfrischluftstrom handelt es sich bevorzugt um von aussen her angesogene Frischluft, welche in der Regel ungefähr dieselbe Temperatur wie die angesogene Frischluft des ersten Luftstroms hat. Bevorzugt strömt die Luft des Zusatzfrischluftstroms im zweiten Betriebszustand im Vergleich zu derjenigen des zweiten Luftstroms im ersten Betriebszustand zumindest im Bereich des Wasserkastens und insbesondere des Wärmetauschelements in eine entgegengesetzte Richtung. Im zweiten Betriebszustand und insbesondere bei Fahrtantritt wird durch den Wasserkasten oft eine verhältnismässig grosse Luftmenge angesogen, beispielsweise aufgrund von beschlagenen Scheiben oder um den Fahrgastraum zu kühlen bzw. zu erwärmen. Indem die zusätzliche Frischluft des Zusatzfrischluftstroms zum Klimagerät, hin geleitet werden kann, kann insgesamt dennoch ein verhältnismässig kleiner Druckabfall in Bezug auf die gesamte angesogene Luftmenge gewährleistet werden. Ein allfälliges im Klimagerät angeordnetes Luftfördermittel kann dadurch mit einem geringeren Energieverbrauch betrieben werden.

Bevorzugt ist zumindest ein Regelelement, welches insbesondere als Ventil, wie beispielsweise eine Absperrklappe oder ein Absperrschieber, ausgebildet ist, vorgesehen, mit welchem wahlweise ermöglicht oder zumindest teilweise verhindert werden kann, dass der Zusatzfrischluftstrom zum Fahrgastraum, insbesondere zum Klimagerät, gelangt. Das Regelelement kann beispielsweise aber auch als ein Luftfördermittel, wie beispielsweise ein Ventilator, ausgebildet sein, mit welchem teilweise verhindert werden kann, dass der Zusatzfrischluftstrom zum Fahrgastraum, insbesondere zum Klimagerät, gelangt. Falls das Luftfördermittel, nicht oder nur schwach in Betrieb ist, generiert das Luftfördermittel einen hohen Strömungswiderstand und verhindert teilweise, dass der Zusatzfrischluftstrom zum Fahrgastraum, insbesondere zum Klimagerät, gelangen kann. Mit Hilfe des Regelelements kann somit insbesondere im zweiten Betriebszustand eingestellt werden, ob vom Klimagerät nur Luft angesogen wird, bzw. in den Fahrgastraum nur Luft gelangt, welche durch den ersten Innenraum des Wasserkastens strömt, oder ob zusätzlich Luft angesogen wird, welche ausserhalb des ersten Innenraums strömt, insbesondere welche ausserhalb des ersten Innenraums strömt und hierbei mit dem Wärmetauschelement in Kontakt kommt.

In einer bevorzugten Ausführungsform bildet das Steuerelement gleichzeitig das Regelelement. Das Steuer- bzw. Regelelement kann in diesem Fall beispielsweise als Ventil, wie beispielsweise als Umlenkklappe, wenigstens zwei Absperrklappen oder wenigstens zwei Absperrschieber, ausgebildet sein. Das Steuer- bzw. Regelelement kann beispielsweise aber auch als wenigstens zwei Luftfördermittel, wie beispielsweise wenigstens zwei Ventilatoren, ausgebildet sein. Bei einer Ausbildung des Steuerelements als Regelelement wird bei einem Umschalten in den zweiten Betriebszustand somit einerseits zumindest teilweise verhindert, dass eine Übertragung von thermischer Energie zwischen dem ersten und den zweiten Luftstrom stattfindet und andererseits wird gleichzeitig ein Zusatzfrischluftstrom, welcher ausserhalb des ersten Innenraums mit dem Wärmetauschelement in Kontakt kommt, zum Fahrgastraum, insbesondere zum Klimagerät, hingeleitet. Ist das Steuer- bzw. Regelelement als wenigstens zwei Luftfördermittel, wie beispielsweise wenigstens zwei Ventilatoren, ausgebildet, so wird beim Umschalten in den zweiten Betriebszustand somit einerseits teilweise verhindert, dass eine Übertragung von thermischer Energie zwischen dem ersten und den zweiten Luftstrom stattfindet, indem ein erstes Luftfördermittel, insbesondere ein erster Ventilator, nicht oder nur schwach in Betrieb ist, da das erste Luftfördermittel einen hohen Strömungswiderstand generiert, falls das erste Luftfördermittel nicht oder nur schwach in Betrieb ist, und andererseits wird gleichzeitig ein Zusatzfrischluftstrom, welcher bevorzugt ausserhalb des ersten Innenraums mit dem Wärmetauschelement in Kontakt kommt, zum Fahrgastraum, insbesondere zum Klimagerät, hingeleitet, indem ein zweites Luftfördermittel, insbesondere ein zweiter Ventilator, in Betrieb ist.

Gemäss einer Weiterbildung der Erfindung handelt es sich bei der Verbindungsstruktur um zumindest eine Verbindungsleitung, insbesondere ein Verbindungsrohr. Dadurch kann die Luft des Zusatzfrischluftstroms beispielsweise direkt in den Fahrgastraum einströmen oder beispielsweise via einen Verdampfer, welcher bevorzugt in einem Klimagerät angeordnet ist, in den Fahrgastraum eingeleitet werden.

Gemäss einer Weiterbildung der Erfindung handelt es sich bei der Verbindungsstruktur um eine in den ersten Innenraum des Wasserkastens mündende Verbindungsöffnung. Dadurch kann die Luft des Zusatzfrischluftstroms direkt in den ersten Innenraum des Wasserkastens einströmen, wo allfälliges Wasser aus dem Zusatzfrischluftstrom abgeschieden und abgeführt werden kann. Via den ersten Innenraum kann die Luft des Zusatzfrischluftstromes bzw. eines dritten Luftstroms vom Luftfördermittel in das Klimagerät angesogen werden. Um einen möglichst kleinen Druckabfall zu gewährleisten, mündet die Verbindungsöffnung vorteilhaft in Bezug auf die Luftstromrichtung des ersten Luftstroms luftstromabwärts von einem allfälligen in den ersten Innenraum hineinragenden Umlenkelement in den ersten Innenraum.

Bevorzugt begrenzt die Leitstruktur, welche dazu dient, den zweiten Luftstrom gezielt zum Wärmetauschelement hinzuleiten, zusammen mit dem Wärmetauschelement einen zweiten Innenraum. Das Wärmetauschelement wird dann bevorzugt durch eine innere Wandung des Wasserkastens gebildet und die Leitstruktur durch eine äussere Wandung. Mit Ausnahme von einer oder mehreren Einlassöffnungen, durch welche hindurch der zweite Luftstrom sowie gegebenenfalls im zweiten Betriebszustand der zuvor erwähnte Zusatzfrischluftstrom in den zweiten Innenraum einströmen können, und einer oder mehrerer Auslassöffnungen, durch welche hindurch der zweite sowie gegebenenfalls der Zusatzfrischluftstrom aus dem zweiten Innenraum ausströmen können, kann der zweite Innenraum einen geschlossenen Raum bilden. Um eine möglichst effiziente Wärmeübertragung zu erreichen, umgibt der zweite Innenraum die innere Wandung vorteilhaft zu einem Grossteil, insbesondere im Wesentlichen vollständig. Gemäss einer Weiterbildung der Erfindung kann aber zusätzlich eine Wasseraustrittsöffnung vorgesehen sein, welche zum Abführen von Wasser aus dem zweiten Innenraum dient. In diesem Fall sind somit zwei ineinander verschachtelte Wasserkästen vorhanden - ein den ersten Innenraum aufweisender innerer Wasserkasten, welcher innerhalb des zweiten Innenraums eines äusseren Wasserkastens angeordnet ist.

Erfindungsgemäss wird ausserdem ein Wasserkasten gemäß Anspruch 10 angegeben, welcher insbesondere gemäss den oben stehenden Ausführungen ausgebildet ist und aufweist
einen ersten Innenraum zum Abscheiden und Abführen von Wasser aus einem den ersten Innenraum durchströmenden ersten Luftstrom; sowie
ein Wärmetauschelement, welches zur Übertragung von thermischer Energie zwischen dem ersten Luftstrom und einem zweiten Luftstrom dient; sowie
zumindest eine Leitstruktur, welche dazu dient, den zweiten Luftstrom gezielt zum Wärmetauschelement hinzuleiten.

Der Wasserkasten weist zumindest ein Steuerelement auf, mit welchem die Übertragung der thermischen Energie zwischen dem ersten Luftstrom und dem zweiten Luftstrom in einem ersten Betriebszustand ermöglicht und in einem zweiten Betriebszustand zumindest teilweise verhindert werden kann.

Gemäss einer Weiterbildung der Erfindung sind eine Isolationsschicht und/oder eine wärmereflektierende Folie vorgesehen, welche den ersten und, falls vorhanden, den zweiten Innenraum zu einem Grossteil, insbesondere im Wesentlichen vollständig, umgibt. Die Isolationsschicht ist bevorzugt aus einem Material mit einer Wärmeleitfähigkeit von weniger als 0.1 W/mK, bestimmt nach der Norm EN ISO 22007-2: 2008, hergestellt. Die wärmereflektierende Folie weist bevorzugt einen Emissionskoeffizienten von weniger als 0.6, bestimmt nach der Norm VDI/VDE 3511-4: 1995, auf. Der Wasserkasten ist dadurch besonders gut energetisch von der Umgebung, insbesondere dem Motorraum, abgeschottet.

Erfindungsgemäss wird zudem ein Verfahren gemäß Anspruch 14 angegeben zur Temperierung eines Kraftfahrzeugs, insbesondere eines Fahrgastraumes eines Kraftfahrzeuges, welches insbesondere gemäss den obigen Ausführungen ausgestaltet ist und einen Wasserkasten aufweist, der gemäss den obigen Angaben als Wärmetauscher ausgebildet ist. Gemäss diesem Verfahren wird in einem ersten Betriebszustand ein zweiter Luftstrom gezielt zum Wärmetauschelement des Wasserkastens hin geleitet, um dadurch eine Übertragung von thermischer Energie zwischen einem den Wasserkasten durchströmenden ersten Luftstrom und dem zweiten Luftstrom zu ermöglichen. In einem zweiten Betriebszustand wird die Übertragung der thermischen Energie zwischen dem ersten Luftstrom und dem zweiten Luftstrom zumindest teilweise, insbesondere vollständig, verhindert.

Um eine optimale Energieeffizienz zu ermöglichen, wird beim erfindungsgemässen Verfahren der erste Betriebszustand vorteilhaft dann eingenommen, wenn eine in einem Fahrgastraum des Kraftfahrzeugs vorliegende Innentemperatur kleiner oder gleich gross wie eine ausserhalb des Kraftfahrzeugs vorliegende Aussentemperatur ist, und der zweite Betriebszustand dann eingenommen, wenn die Innentemperatur höher als die Aussentemperatur ist.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine zentrale Schnittansicht durch einen als Wärmetauscher ausgebildeten Wasserkasten eines Kraftfahrzeuges gemäss des Standes der Technik;
- Fig. 2: eine zentrale Schnittansicht durch einen Wasserkasten eines ersten, nicht erfindungsgemässen Kraftfahrzeugs;
- Fig. 3a: eine zentrale Schnittansicht durch einen Wasserkasten eines zweiten erfindungsgemässen Kraftfahrzeugs, in einem ersten Betriebszustand;
- Fig. 3b: eine zentrale Schnittansicht durch den in der Fig. 3a gezeigten Wasserkasten, in einem zweiten Betriebszustand;
- Fig. 4: eine Schnittansicht durch ein schematisch dargestelltes, drittes erfindungsgemässes Kraftfahrzeug;
- Fig. 5a: eine zentrale Schnittansicht durch einen Wasserkasten sowie ein mit diesem verbundenes Klimagerät eines vierten erfindungsgemässen Kraftfahrzeugs, in einem ersten Betriebszustand;
- Fig. 5b: eine zentrale Schnittansicht durch den Wasserkasten und das mit diesem verbundene Klimagerät des in der Fig. 5a gezeigten Kraftfahrzeugs, in einem zweiten Betriebszustand;
- Fig. 6: eine zentrale Schnittansicht durch einen Wasserkasten sowie ein mit diesem verbundenes Klimagerät eines fünften erfindungsgemässen Kraftfahrzeugs;
- Fig. 7: eine zentrale Schnittansicht durch einen Wasserkasten sowie ein mit diesem verbundenes Klimagerät eines sechsten erfindungsgemässen Kraftfahrzeugs;
- Fig. 8: eine zentrale Schnittansicht durch einen Wasserkasten sowie ein mit diesem verbundenes Klimagerät eines siebten erfindungsgemässen Kraftfahrzeugs;
- Fig. 9a: eine zentrale Schnittansicht durch einen Wasserkasten sowie ein mit diesem verbundenes Klimagerät eines achten erfindungsgemässen Kraftfahrzeugs, in einem ersten Betriebszustand;
- Fig. 9b: eine zentrale Schnittansicht durch den in der Fig. 9a gezeigten Wasserkasten und das mit diesem verbundene Klimagerät, in einem zweiten Betriebszustand;
- Fig. 10: eine zentrale Schnittansicht durch einen Wasserkasten sowie ein mit diesem verbundenes Klimagerät eines neunten erfindungsgemässen Kraftfahrzeugs;
- Fig. 11: eine zentrale Schnittansicht durch einen Wasserkasten sowie ein mit diesem verbundenes Klimagerät eines zehnten erfindungsgemässen Kraftfahrzeugs;
- Fig. 12a: eine zentrale Schnittansicht durch ein schematisch dargestelltes elftes erfindungsgemässes Kraftfahrzeug, in einem ersten Betriebszustand; sowie
- Fig. 12b: eine zentrale Schnittansicht durch das in der Fig. 12a gezeigte Kraftfahrzeug, in einem zweiten Betriebszustand.

### BESCHREIBUNG BEVORZUGTER AUSFÜHRUNGSFORMEN

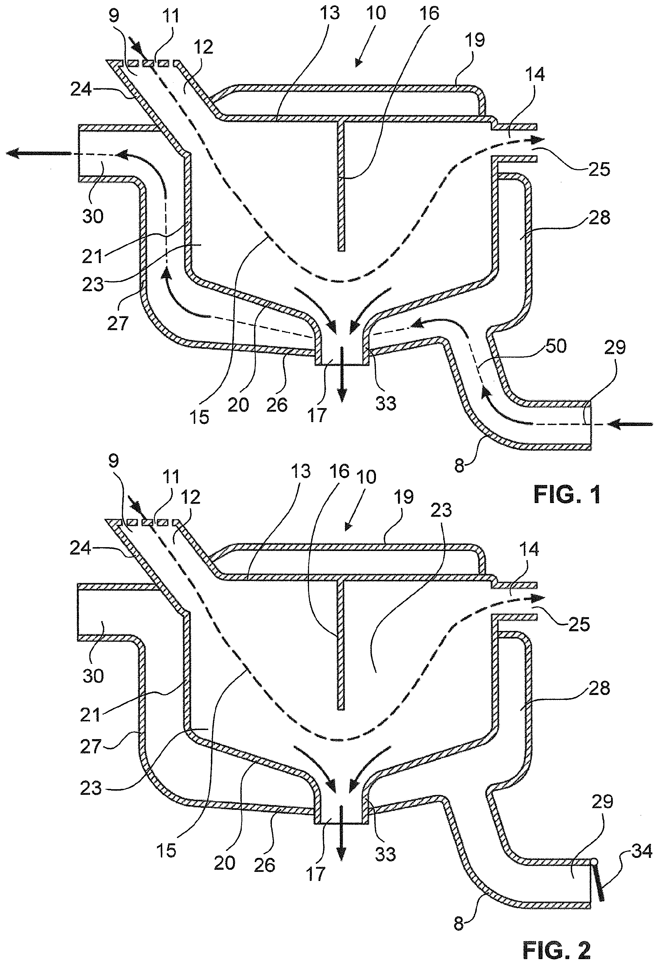

Für die im Folgenden beschriebenen und in den Figuren 1 bis 12b gezeigten Ausführungsformen werden jeweils dieselben Bezugszeichen verwendet für identisch oder ähnlich ausgebildete Elemente, welche eine gleiche oder ähnliche Funktion erfüllen.

Orts- und Richtungsangaben wie oben, unten, vertikal, horizontal, nach oben, nach unten etc. betreffen im Folgenden jeweils das Kraftfahrzeug 1 bzw. den darin eingebauten Wasserkasten 10, in ihrer üblichen, bestimmungsgemässen Lage entsprechend der in den Figuren 1 bis 12b gezeigten Ausrichtung. Beim bestimmungsgemässen in einem Kraftfahrzeug 1 eingebauten Wasserkasten 10 sind die Lufteinlassöffnung 9 und vorteilhaft auch die Luftauslassöffnung 25 bevorzugt oberhalb der Wasseraustrittsöffnung 17 angeordnet.

In der Figur 1 ist ein als Wärmetauscher ausgebildeter Wasserkasten 10 eines Kraftfahrzeuges 1 gemäss des Standes der Technik gezeigt. Der Wasserkasten 10 bildet einen Hohlkörper mit einer inneren Seitenwandung 21, die sich umlaufend von einer inneren Bodenwandung 20 aus nach oben hin erstreckt. Zusammen mit einer inneren Deckenwandung 13 begrenzen die innere Seitenwandung 21 und die innere Bodenwandung 20 einen ersten Innenraum 23. Die innere Seitenwandung 21 ist im Wesentlichen hohlzylindrisch ausgebildet, wobei sie sich nach oben hin leicht aufweiten kann. Die innere Bodenwandung 20 ist trichterförmig ausgebildet und weitet sich von unten nach oben hin auf. In ihrem untersten Punkt weist die innere Bodenwandung 20 eine zentral angeordnete Wasseraustrittsöffnung 17 auf, welche seitlich umlaufend von der Innenfläche eines Ablaufrohrs 33 begrenzt wird, das sich von der inneren Bodenwandung 20 aus nach unten hin erstreckt.

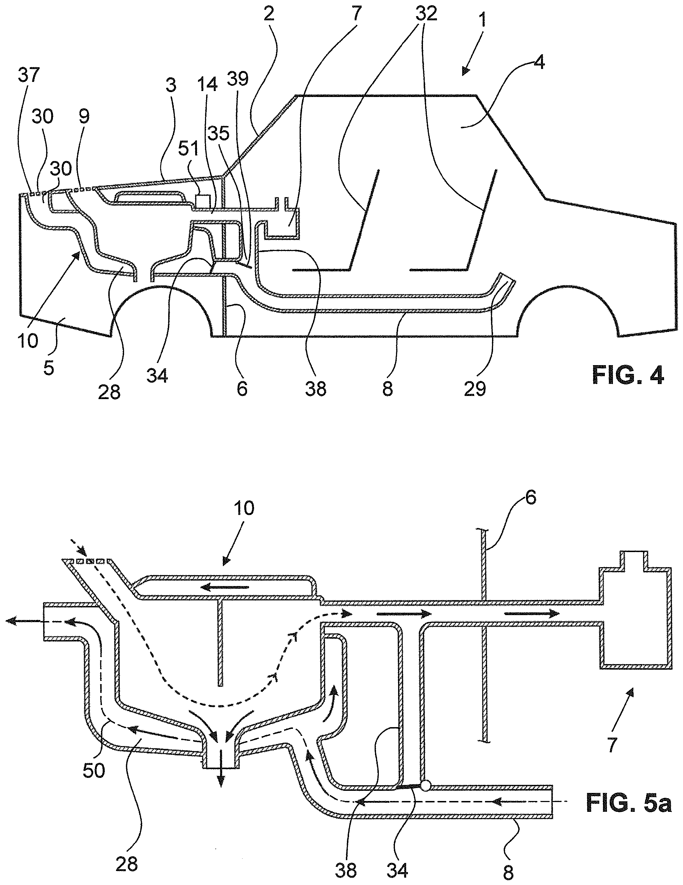

Im Übergangsbereich zwischen der inneren Deckenwandung 13 und der inneren Seitenwandung 21 ist eine Zuleitung 24 vorgesehen, welche einen Einlasskanal 12 bildet. Dieser Einlasskanal 12 verbindet die Lufteinlassöffnung 9, durch welche Frischluft ausserhalb des Kraftfahrzeugs ansaugbar ist, mit dem ersten Innenraum 23 des Wasserkastens 10. Diametral gegenüberliegend zur Zuleitung 24 ist im oberen Bereich der inneren Seitenwandung 21 eine Abführleitung vorgesehen, welche eine Luftkanal 14 bildet. Der Luftkanal 14 durchsetzt die Stirnwand 6 des Kraftfahrzeugs 1 (siehe Figur 4) und mündet in eine Luftauslassöffnung 25. Durch den ersten Innenraum 23 des Wasserkastens 10 hindurch kann somit von einem Klimagerät 7 Frischluft durch die Lufteinlassöffnung 9 angesaugt werden, welche vom Klimagerät 7 aus in den Fahrgastraum 4 eines Kraftfahrzeugs (siehe z.B. Figur 4) weitergeleitet wird. Die durch den ersten Innenraum 23 angesogene Frischluft bildet einen ersten Luftstrom 15.

Oberhalb der Wasseraustrittsöffnung 17 ist an der inneren Deckenwandung 13 ein Umlenkelement 16 angebracht, welches sich von der inneren Deckenwandung 13 in senkrechter Richtung in den ersten Innenraum 23 hinein erstreckt. Das Umlenkelement 16 erstreckt sich dabei geringfügig weniger weit in die vertikale Richtung als die innere Seitenwand 21. In die horizontale Richtung erstreckt sich das Umlenkelement 16 in diametraler Richtung über die innere Deckenwandung 13, rechtwinklig zu einer imaginären geraden Linie, welche die Mündungen des Einlasskanals 12 und des Luftkanals 14 in den ersten Innenraum 23 hinein miteinander verbindet.

Im Bereich der Lufteinlassöffnung 9 kann ein Gitter 11 vorgesehen sein, um zu verhindern, dass unerwünschte, im Schwallwasser enthaltene Bestandteile in die Zuleitung 24 und somit in den ersten Innenraum 23 eindringen. Insbesondere ein Eindringen von Schnee und Laub soll dadurch verhindert werden.

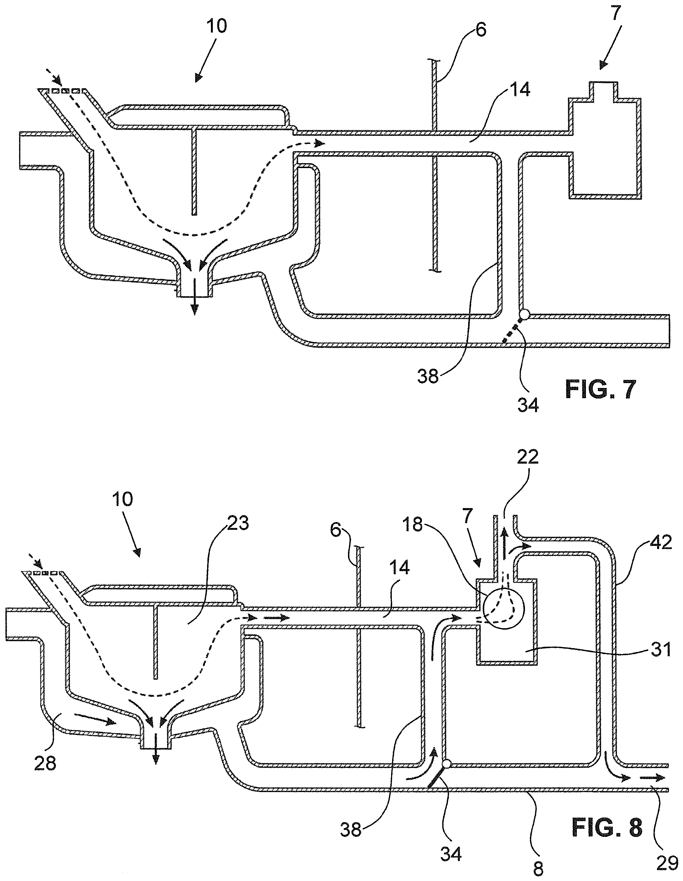

Die Luftauslassöffnung 25 mündet in das Klimagerät 7, welches ein Luftfördermittel in Form eines Ventilators 18 aufweist (z.B. Figur 8). Das Klimagerät 7 umfasst zudem einen Verdampfer und/oder ein Heizelement, welche in den Figuren jedoch beide nicht dargestellt sind. Das Klimagerät 7 weist zudem einen Luftauslass 22 auf, welcher in den Fahrgastraum 4 des Kraftfahrzeugs 1 mündet.

Wie in der Figur 1 mit gestrichelten Linien angedeutet ist, wird die Frischluft, welche einen ersten Luftstrom 15 bildet, mittels des Ventilators 18 durch die Lufteinlassöffnung 9 angesaugt und gelangt durch den Einlasskanal 12 in den ersten Innenraum 23 des Wasserkastens 10. Im ersten Innenraum 23 umströmt die tropfenhaltige Frischluft das Umlenkelement 16, welches grundsätzlich auch so ausgebildet sein könnte, dass es vom ersten Luftstrom 15 horizontal umströmt wird. Wassertropfen, welche in der angesaugten Frischluft enthalten sind, werden am Umlenkelement 16 abgeschieden, von der inneren Bodenwandung 20 gesammelt und gelangen dann nach unten in die Wasseraustrittsöffnung 17. Durch die Wasseraustrittsöffnung 17 hindurch verlässt das abgeschiedene Wasser den Wasserkasten 10 nach unten hin. Der von Wassertropfen weitgehend befreite erste Luftstrom 15 gelangt dann via den Luftkanal 14 in das Klimagerät 7, wo die Luft erwärmt bzw. abgekühlt werden kann. Vom Innern des Klimageräts aus gelangt der erste Luftstrom 15 dann durch den Luftauslass 22 in den Fahrgastraum 4.

Um nun die vom Klimagerät 7 angesaugte Frischluft des ersten Luftstroms 15 vorzutemperieren und dadurch den Energiebedarf des Klimageräts 7 zu reduzieren, ist der Wasserkasten 10 als Wärmetauscher ausgebildet, wobei die inneren Wandungen 13, 20 und 21 gemeinsam ein Wärmetauschelement bilden. Zudem weist der Wasserkasten 10 Leitstrukturen auf, welche dazu dienen, Abluft aus dem Fahrgastraum 4 gezielt zu diesem Wärmetauschelement hin zu leiten. Hierzu weist der Wasserkasten 10 eine äussere Seitenwandung 27 auf, welche im Wesentlichen hohlzylindrisch ausgestaltet ist und umlaufend um die innere Seitenwandung 21 herum angeordnet ist. An ihrem unteren Ende geht die äussere Seitenwandung 27 in eine äussere Bodenwandung 26 über, welche die innere Bodenwandung 20 nach unten hin im Wesentlichen vollständig überdeckt. Die äussere Bodenwandung 26 weist eine zentrale Öffnung auf, durch welche hindurch sich das Ablaufrohr 33 erstreckt. An ihrem oberen Ende geht die äussere Seitenwandung 27 in eine äussere Deckenwandung 19 über, welche die innere Deckenwandung 13 nach oben hin im Wesentlichen vollständig überdeckt.

Zusammen mit der inneren Seitenwandung 21, der inneren Bodenwandung 20 und der inneren Deckenwandung 13 begrenzen die äussere Seitenwandung 27, die äussere Bodenwandung 26 und die die äussere Deckenwandung 19 einen zweiten Innenraum 28, welcher die innere Seitenwandung 21 umgibt, sowie die innere Bodenwandung 20 und die innere Deckenwandung 13 überdeckt. Ein Teil des zweiten Innenraums 28 bildet somit im Bereich der inneren Seitenwandung 21 einen umlaufenden Ringraum.

Im Bereich der äusseren Bodenwandung 26 ist in einem der Stirnwand 6 zugewandten Bereich eine Ansaugleitung 8 vorgesehen, welche von unten her in den zweiten Innenraum 28 mündet. Die Ansaugleitung weist eine Ablufteinlassöffnung 29 auf, welche im Fahrgastraum 4 oder im Motorraum 5 angeordnet sein kann. Im Falle, dass die Ablufteinlassöffnung 29 im Motorraum 5 angeordnet ist, kann die Ansaugleitung 8 an eine weitere Leitung angeschlossen sein, welche sich durch die Stirnwand 6 in den Fahrgastraum 4 hinein erstreckt. Auf der der Stirnwand 6 abgewandten Seite des Wasserkastens 10 ist in einem oberen Bereich der äusseren Seitenwandung 27 eine Abluftauslassöffnung 30 vorgesehen. Diese Abluftauslassöffnung 30 ist in Bezug auf den zweiten Innenraum 28 räumlich diagonal gegenüberliegend zur Ansaugleitung 8 angeordnet, sodass im zweiten Innenraum 28 eine Luftströmung von der Ansaugleitung 8 zur Abluftauslassöffnung 30 hin entstehen kann, die den ersten Innenraum 23 über einen maximalen Bereich umgibt.

Beim Betrieb des Klimageräts 7 wird somit Ablauft aus dem Fahrgastraum 4 durch die Ansaugleitung 8 in den zweiten Innenraum 28 des Wasserkastens 10 geleitet. Die bereits temperierte Abluft bildet einen zweiten Luftstrom 50, welcher im zweiten Innenraum 28 die innere Bodenwandung 20, die innere Deckenwandung 13 sowie die innere Seitenwandung 21 umströmt, wodurch die Temperatur des zweiten Luftstroms 50 auf die den ersten Innenraum 23 durchströmende Frischluft des ersten Luftstroms 15 übertragen wird. Die im ersten Innenraum 23 vorhandene Frischluft wird dadurch vortemperiert. Die durch die Ansaugleitung 8 geleitete Abluft umströmt somit im Wesentlichen alle den ersten Innenraum 23 begrenzenden Wandungen. Via die Abluftauslassöffnung 30 verlässt die Abluft des zweiten Luftstroms 50 den Wasserkasten 10 dann nach aussen hin.

Um eine effiziente Übertragung der thermischen Energie zwischen dem ersten Luftstrom 15 und dem zweiten Luftstrom 50 zu ermöglichen, können an der inneren Seitenwandung 21 und/oder an der inneren Deckenwandung 13 und/oder an der inneren Bodenwandung 20 auf der Innenseite im ersten Innenraum 23 und/oder auf der Aussenseite im zweiten Innenraum 28 Wärmetauschstrukturen zum Vergrössern der jeweiligen Oberflächen vorhanden sein. Dabei kann es sich beispielsweise um Rippen, Rillen, Vorsprünge oder andere dem Fachmann hinlänglich bekannte und dafür entsprechend geeignete Strukturen handeln. Insbesondere bevorzugt sind die innere Seitenwandung 21 und/oder die innere Deckenwandung 13 und/oder die innere Bodenwandung 20 zumindest teilweise gewellt ausgebildet.

In der Figur 2 ist eine erste, nicht erfindungsgemässe Ausführungsform eines Kraftfahrzeuges mit einem Wasserkasten 10 gezeigt. Im Vergleich zu dem in der Figur 1 gezeigten Wasserkasten 10 ist hier ein Steuerelement in Form einer Absperrklappe 34 vorgesehen, welches im Bereich der Ablufteinlassöffnung 29 an der Ansaugleitung 8 angebracht ist und zum Verschliessen der Ablufteinlassöffnung 29 dient. Mittels der Absperrklappe 34 kann somit teilweise oder vollständig verhindert werden, dass die Abluft des zweiten Luftstroms 50 in den zweiten Innenraum 28 hineingelangt.

Die inneren Wandungen 13, 20 und 21 bilden gemeinsam das Wärmetauschelement. Bevorzugt weist das Wärmetauschelement eine Wandstärke von weniger als 1 mm, insbesondere von weniger als 0.5 mm, auf. Dadurch kann ein guter Wärmedurchgang des Wärmetauschelements unabhängig vom verwendeten Material erreicht werden. Alternativ oder zusätzlich dazu kann das Wärmetauschelement auch aus einem gut wärmeleitfähigen Material hergestellt sein, wie insbesondere Metall. Es kann aber auch aus einem Kunststoff, wie insbesondere Polypropylen, hergestellt sein. Falls das Wärmetauschelement aus Polypropylen (PP) hergestellt ist, weist es bevorzugt einen Anteil von 20 % Talkum auf. Bevorzugt wird ein Kunststoffmaterial mit einer besonders hohen Wärmeleitfähigkeit vorgesehen. Beispielsweise kann auch nur eine der genannten Wandungen 13, 20 und 21 das Wärmetauschelement bilden oder zwei der genannten Wandungen 13, 20 und 21 können gemeinsam das Wärmetauschelement bilden. Es können selbstverständlich auch nur Teilbereiches der Wandungen 13, 20 und 21 an der Bildung des Wärmetauschelementes beteiligt sein.

In einem ersten Betriebszustand, wenn die im Fahrgastraum 4 des Kraftfahrzeugs 1 vorliegende Innentemperatur kleiner oder gleich gross wie eine ausserhalb des Kraftfahrzeugs 1 vorliegende Aussentemperatur ist, ist die Absperrklappe 34 geöffnet, sodass Abluft aus dem Fahrgastraum 4 in den zweiten Innenraum 28 einströmen und via die innere Bodenwandung 20, die innere Seitenwandung 21 und die innere Deckenwandung 13 den durch den ersten Innenraum 23 hindurchströmenden ersten Luftstrom 15 vorkühlen kann. Nach einem längeren Stillstand des Kraftfahrzeugs 1, wenn die im Fahrgastraum 4 vorliegende Innentemperatur aufgrund der Sonnenerwärmung höher als die Aussentemperatur und somit höher als die Temperatur der einströmenden Frischluft des ersten Luftstroms 15 ist, wird hingegen ein zweiter Betriebszustand eingenommen, in welchem die Absperrklappe 34 verschlossen ist, sodass ein Einströmen der aufgeheizten Abluft aus dem Fahrgastraum 4 in den zweiten Innenraum 28 hinein verhindert wird. Eine Übertragung von thermischer Energie vom zweiten Luftstrom 50 auf den ersten Luftstrom 15 wird im zweiten Betriebszustand also verhindert. Mittels einer derartigen Ansteuerung der Absperrklappe 34 im ersten bzw. zweiten Betriebszustand kann somit eine optimale Energieeffizienz gewährleistet werden. Anstatt eines Ventils, wie beispielsweise die Absperrklappe 34, kann das Steuerelement beispielsweise auch als Absperrschieber (in der Figur nicht gezeigt) oder auch als Luftfördermittel (in der Figur nicht gezeigt), wie beispielsweise ein Ventilator, ausgebildet sein. In Falle eines Luftfördermittels kann im zweiten Betriebszustand zum Teil verhindert werden, dass der zweite Luftstrom zum Wärmetauschelement gelangt, insbesondere falls das Luftfördermittel nicht oder nur schwach in Betrieb ist, da das Luftfördermittel einen hohen Strömungswiderstand generiert, falls das Luftfördermittel nicht oder nur schwach in Betrieb ist. Ventile, wie beispielsweise ein Absperrschieber, sowie Luftfördermittel, wie beispielsweise ein Ventilator, sind dem Fachmann bekannt.

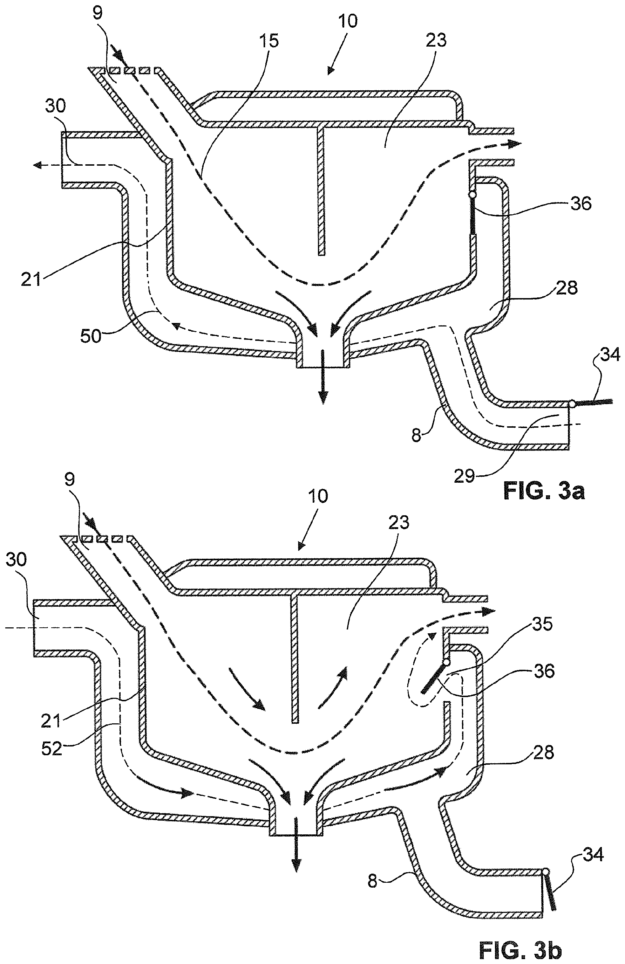

Der in den Figuren 3a und 3b gezeigte erfindungsgemäße Wasserkasten 10 weist im Vergleich zu demjenigen der Figur 2 zusätzlich eine Verbindungsöffnung 35 auf, welche mit einem Regelelement in Form einer zweiten Absperrklappe 36 verschliessbar ist. Anstatt eines Ventils, wie beispielsweise die Absperrklappe 36, kann das Regelelement beispielsweise auch als Absperrschieber (in der Figur nicht gezeigt) ausgebildet sein. Die Verbindungsöffnung 35 ist innerhalb der inneren Seitenwandung 21 auf derselben Seite des Wasserkastens 10 wie die Ansaugleitung 8 angeordnet.

Im ersten Betriebszustand, wenn die Innentemperatur im Fahrgastraum 4 kleiner oder gleich gross wie die Aussentemperatur ist, ist die erste Absperrklappe 34 geöffnet und die zweite Absperrklappe 36 verschliesst die Verbindungsöffnung 35. Der zweite Luftstrom 50 gelangt dann, wie es in der Figur 3a gezeigt ist, durch die Ablufteinlassöffnung 29 hindurch in den zweiten Innenraum 28 und via die Ablufteinlassöffnung 30 nach aussen hin. In dem in der Figur 3b gezeigten zweiten Betriebszustand ist die Innentemperatur z.B. bei Fahrtantritt höher als die Aussentemperatur, und die erste Absperrklappe 34 ist geschlossen und die zweite Absperrklappe 36 geöffnet. Dadurch kann vom Klimagerät 7 zusätzlich Frischluft von der Abluftauslassöffnung 30 her in den zweiten Innenraum 28 und von dort durch die Verbindungsöffnung 35 in den ersten Innenraum 23 angesogen und in den Fahrgastraum 4 geleitet werden. Wenn z.B. bei einer hohen Innentemperatur oder bei beschlagenen Scheiben ein erhöhter Luftdurchsatz erwünscht ist, kann somit durch Öffnen der Verbindungsöffnung 35 ein Zusatzfrischluftstrom 52 mit Frischluft in das Klimagerät 7 und in den Fahrgastraum 4 gelangen, ohne dass aufgrund der erhöhten angesaugten Gesamtluftmenge der Druckabfall zwischen Lufteinlassöffnung 9 und Klimagerät 7 erhöht wird.

Die Verbindungsöffnung 35 muss nicht zwingend in den ersten Innenraum 23 des Wasserkastens 10 münden, sondern kann auch, wie es in der Ausführungsform der Figur 4 gezeigt ist, in eine Verbindungsleitung 38 münden, welche ihrerseits in den Luftkanal 14 mündet, der den Wasserkasten 10 und das Klimagerät 7 miteinander verbindet.

Die Verbindungsöffnung 35 ist in diesem Fall mittels einer zweiten Absperrklappe 39 verschliessbar, welche in Richtung des zweiten Luftstroms 50 (bei geöffneter erster Absperrklappe 34 und geschlossener zweiter Absperrklappe 39) luftstromaufwärts in Bezug auf die erste Absperrklappe 34 in der Ansaugleitung 8 angeordnet ist. Durch diese Anordnung ist es bei der in der Figur 4 gezeigten Ausführungsform insbesondere im zweiten Betriebszustand bei Fahrtantritt möglich, die Fahrgastinnenluft via einen Umluftkreislauf durch die Leitungen 8 und 38 zu kühlen, während gleichzeitig frische Aussenluft durch die Lufteinlassöffnung 9 und den Wasserkasten 10 einströmt. Die Kühlung der Luft im Fahrgastraum 4 wird dadurch beschleunigt. Das Raumklima und der Kühlvorgang können mittels der zweiten Absperrklappe 39, welches ein Regelelement bildet, wesentlich beeinflusst werden.

Die Figur 4 dient zudem zur Illustration der Anordnung des Wasserkastens 10 unterhalb der Motorhaube 3 im Motorraum 5 des Kraftfahrzeugs 1. Das Klimagerät 7 ist üblicherweise im Bereich des Armaturenbretts unterhalb einer Windschutzscheibe 2 des Kraftfahrzeugs 1 angeordnet. Eine Stirnwand 6, welche den Motorraum 5 vom Fahrgastraum 4 trennt, wird dabei vom Luftkanal 14 und der Ansaugleitung 8 durchsetzt. Die Abluftauslassöffnung 30 mündet im Bereich der Motorhaube 3 nach aussen hin und ist mit einem Gitter 37 verschlossen.

Bei der in der Figur 4 gezeigten Ausführungsform ist die Ablufteinlassöffnung 29 der Ansaugleitung 8 in einem hinteren Bereich des Kraftfahrzeugs 1 und insbesondere hinter den Fahrgastsitzen 32 angeordnet. Auf diese Weise kann eine optimale Luftzirkulation im Fahrgastraum 4 erreicht werden.

In einer alternativen Ausführungsform könnte die in der Figur 4 gezeigte erste Absperrklappe 34 auch entfallen, wenn die zweite Absperrklappe 39 sowohl zum Verschliessen des zweiten Innenraums 28 gegenüber der Ansaugleitung 8 als auch zum Verschliessen der Verbindungsöffnung 35 dienen würde. Die zweite Absperrklappe 39 würde dann also auch die Funktion der ersten Absperrklappe 34 übernehmen.

In der Figur 4 ist ausserdem schematisch eine Steuereinheit 51 gezeigt, welche hier im Motorraum 5 angeordnet ist, aber selbstverständlich auch im Fahrgastraum 4 untergebracht werden könnte. Die Steuereinheit 51 weist beispielsweise einen Aktuator, wie beispielsweise einen Motor oder einen Elektromagneten (in der Figur nicht gezeigt), und eine mit dem Aktuator verbundene Auswerteinheit, wie beispielsweise eine Platine (in der Figur nicht gezeigt) auf und ist mit Sensoren in Form von Thermometern (in der Figur nicht gezeigt) verbunden, welche zum Messen der im Fahrgastraum 4 sowie der ausserhalb des Kraftfahrzeugs 1 herrschenden Temperaturen dienen. In Abhängigkeit der von diesen Sensoren empfangenen Daten steuert die Steuereinheit 51 die Absperrklappen 34 und 39 gemäss dem ersten bzw. zweiten Betriebszustand an, um diese in eine entsprechende Klappenstellung zu bringen.

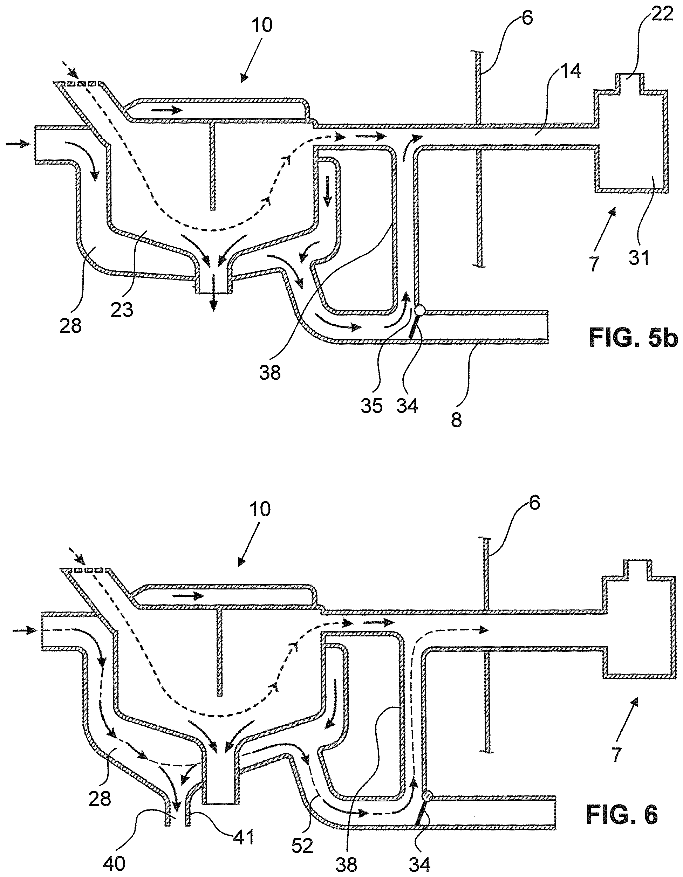

Bei der in den Figuren 5a und 5b gezeigten Ausführungsform mündet die Verbindungsleitung 38 im Gegensatz zur Ausführungsform der Figur 4 in Richtung des zweiten Luftstroms 50 (Figur 5a) luftstromabwärts zum Drehpunkt der ersten Absperrklappe 34 in die Ansaugleitung 8. Die Verbindungsleitung 38 ist hier zudem, wie es in den Figuren 5a und 5a mit der Stirnwand 6 angedeutet ist, im Motorraum 5 angeordnet.

Die Absperrklappe 34 bildet hier sowohl ein Steuerelement zur Verhinderung, dass Abluft im zweiten Betriebszustand (Figur 5b) von der Ansaugleitung 8 in den zweiten Innenraum 28 gelangen kann, als auch ein Regelelement, um ebenfalls im zweiten Betriebszustand eine Luftströmung vom zweiten Innenraum 28 via die Verbindungsöffnung 35 in die Verbindungsleitung 38 zu ermöglichen, damit zusätzliche Frischluft von aussen her durch den zweiten Innenraum 28 und den Luftkanal 14 zum Klimagerät 7 gelangen kann. Die Absperrklappe 34 ist somit als Umlenkklappe ausgebildet. Anstatt der Absperrklappe 34, welche als Steuerelement als auch als Regelelement wirkt, können auch zumindest zwei Absperrklappen (in Figur nicht gezeigt), zumindest zwei Absperrschieber (in Figur nicht gezeigt) oder zumindest zwei Luftfördermittel (in Figur nicht gezeigt), wie beispielsweise zwei Ventilatoren, vorgesehen sein, welche jeweils gemeinsam die Funktion des Steuerelementes als auch des Regelelementes erfüllen.

Die in der Figur 6 gezeigte Ausführungsform ist identisch zu derjenigen der Figuren 5a und 5b, mit der Ausnahme, dass der Wasserkasten 10 hier zusätzlich eine von einem Ablaufrohr 41 umgebene Wasseraustrittsöffnung 40 aufweist, welche zum Abführen von Wasser aus dem zweiten Innenraum 28 dient. Im zweiten Betriebszustand, in welchem ein Zusatzfrischluftstrom 52 durch den zweiten Innenraum 28 hindurch zum Klimagerät 7 gelangt, kann dadurch Wasser, welches im zweiten Innenraum 28 vom Zusatzfrischluftstrom 52 abgeschieden wird, nach aussen hin abgeführt werden.

Bei der in der Figur 7 gezeigten Ausführungsform ist die Verbindungsleitung 38 im Gegensatz zu den Figuren 5a und 5b im Fahrgastraum 4 anstatt im Motorraum 5 angeordnet.

Bei der in der Figur 8 gezeigten Ausführungsform, welche ansonsten mit derjenigen der Figur 7 identisch ist, ist eine zusätzliche Verteilleitung 42 vorgesehen, mit welcher zumindest ein Teil der temperierten Luft aus dem Klimagerät 7 in die Ansaugleitung 8 und von dort via die Ablufteinlassöffnung 29 in den Fahrgastraum 4 geführt werden kann. Im zweiten Betriebszustand, das heisst, wenn Frischluft mittels einem im Innenraum 31 des Klimageräts 7 angeordneten Ventilator 18 sowohl durch den ersten Innenraum 23 als auch durch den zweiten Innenraum 28 angesogen wird, kann dadurch die Ansaugleitung 8 benutzt werden, um temperierte Frischluft zusätzlich z.B. in einem hinteren Bereich des Kraftfahrzeugs 1 in den Fahrgastraum 4 einströmen zu lassen.

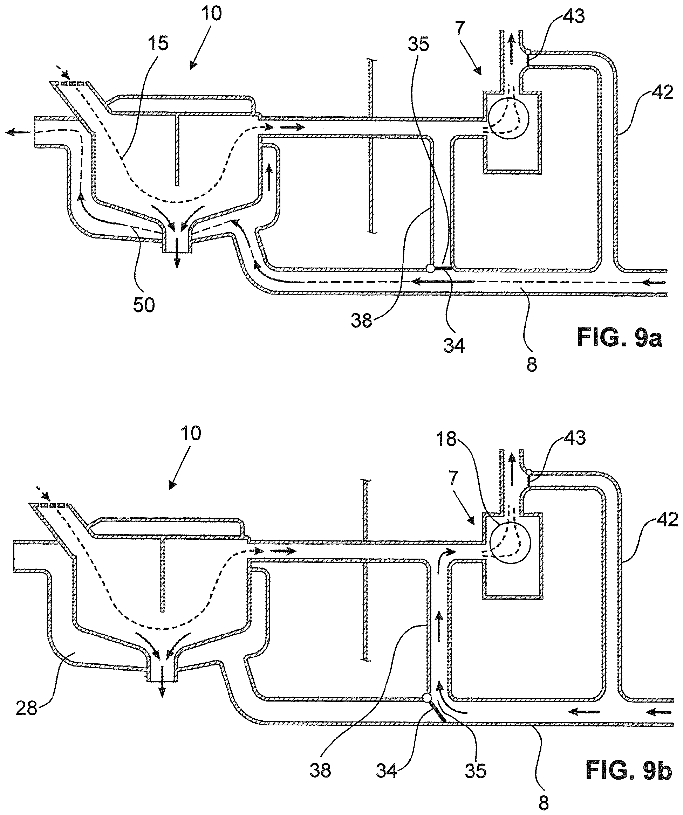

Bei der in den Figuren 9a und 9b gezeigten Ausführungsform ist die Verteilleitung 42 mittels einer ersten Absperrklappe 34 verschliessbar. Ausserdem unterscheidet sich diese Ausführungsform dadurch von der in der Figur 8 gezeigten Ausführungsform, dass der Drehpunkt der ersten Absperrklappe 34 in Richtung des zweiten Luftstroms 50 (Figur 9a) luftstromabwärts von der Verbindungsöffnung 35 angeordnet ist. Die erste Absperrklappe 34 dient dadurch in dem in der Figur 9b gezeigten zweiten Betriebszustand nicht nur zum Verschliessen des zweiten Innenraums 28 gegenüber der Ansaugleitung 8, sondern gleichzeitig auch zum Freigeben der Verbindungsöffnung 35 gegenüber der Ansaugleitung 8. Dadurch ist es möglich, im zweiten Betriebszustand in einem Umluftkreislauf Luft aus einem hinteren Bereich des Fahrgastraums 4 in das Klimagerät 7 anzusaugen.

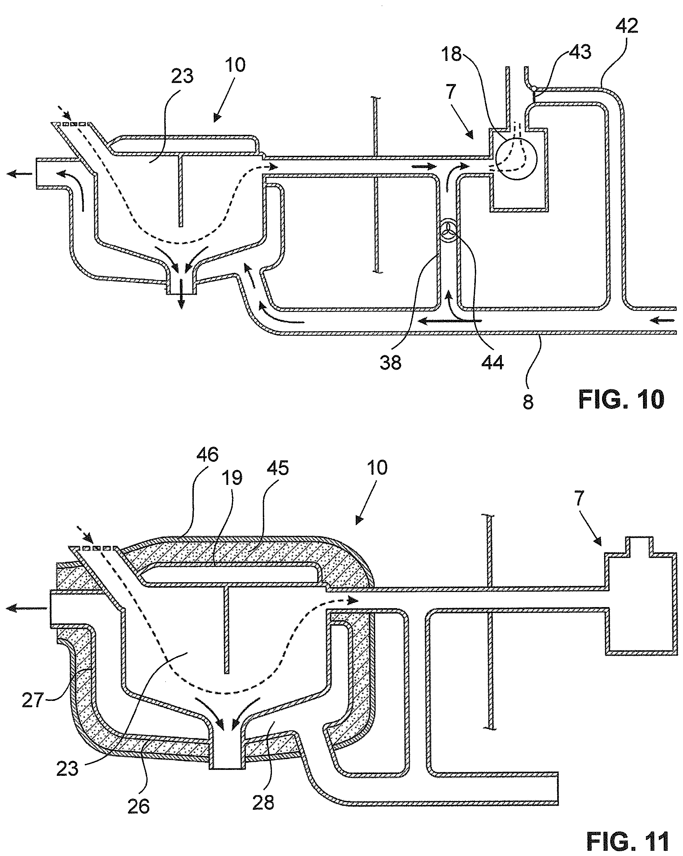

Bei der in der Figur 10 gezeigten Ausführungsform, bei welcher die erste Absperrklappe zwar vorhanden, aber nicht sichtbar ist, ist zusätzlich ein Gebläse 44 innerhalb der Verbindungsleitung 38 vorgesehen. Das Gebläse 44 kann mit einer niedrigeren Förderleistung als der Ventilator 18 des Klimageräts 7 betrieben werden, um dadurch im ersten Betriebszustand einen kontinuierlichen Umluftkreislauf aufrechtzuerhalten, während gleichzeitig durch den ersten Innenraum 23 hindurch vortemperierte Frischluft angesaugt wird.

Der in der Figur 11 gezeigte Wasserkasten weist eine Isolation 45 sowie eine reflektierende Folie 46 auf, welche um die äussere Deckenwandung 19, die äussere Bodenwandung 26 sowie die äussere Seitenwandung 27 herum angeordnet sind und diese weitgehend umschliessen. Das Material der Isolation 45 weist eine Wärmeleitfähigkeit von weniger als 0.1 W/mK, bestimmt nach der Norm EN ISO 22007-2: 2008, auf, und die wärmereflektierende Folie 46 einen Emissionskoeffizienten von weniger als 0.6 bestimmt nach der Norm VDI/VDE 3511-4: 1995 auf. Der Wasserkasten 10 ist dadurch wärmetechnisch optimal von seiner Umgebung und insbesondere dem Motorraum 5 abgeschirmt. Wie in Figur 11 ersichtlich, umgeben die Isolation 45 als auch die reflektierende Folie 46 jeweils einen ersten Innenraum 23 als auch einen zweiten Innenraum 28.

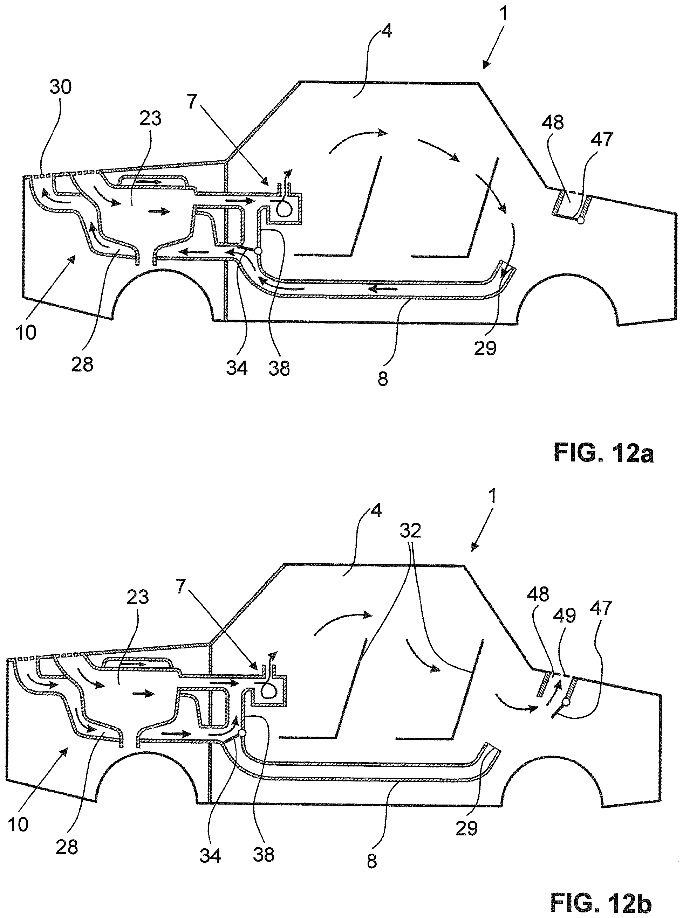

Bei der in den Figuren 12a und 12b gezeigten Ausführungsform kann im ersten Betriebszustand (Fig. 12a), wenn die Absperrklappe 34 den Durchgang zwischen Ansaugleitung 8 und zweitem Innenraum 28 freigibt, Luft via die in einem hinteren Bereich des Fahrgastraums 4 angeordnete Ablufteinlassöffnung 29 dem zweitem Innenraum 28 zugeführt werden, um dadurch die durch den ersten Innenraum 23 einströmende Frischluft vorzutemperieren. Es ergibt sich dabei eine Luftströmung durch den ersten Innenraum 23 und das Klimagerät 7 hindurch in den Fahrgastraum 4 und von diesem via die Ansaugleitung 8 in den zweiten Innenraum 28 und via die Abluftauslassöffnung 30 wieder nach aussen hin. Im zweiten Betriebszustand (Fig. 12b), wenn die Absperrklappe 34 den Durchgang von der Ansaugleitung 8 zum zweiten Innenraum 28 verschliesst, jedoch gleichzeitig ermöglicht, dass durch den zweiten Innenraum 28 einströmende Frischluft zum Klimagerät 7 gelangt, wird eine im hinteren Bereich des Fahrgastraums 4 angeordnete Abluftklappe 47 geöffnet. Dadurch kann die durch den ersten und den zweiten Innenraum 23 und 28 einströmende Luft den Fahrgastraum 4 durch eine mit einem Gitter 49 überdeckte Abluftöffnung 48 wieder verlassen. Es entsteht dadurch im Fahrgastraum 4 eine Luftströmung vom Klimagerät 7 entlang den Fahrgastsitzen 32 zur Abluftöffnung 48.

Selbstverständlich ist die hier beschriebene Erfindung nicht auf die erwähnten Ausführungsformen beschränkt und eine Vielzahl von Abwandlungen ist möglich. So muss der Wasserkasten 10 beispielsweise nicht zwingend einen zweiten Innenraum 28 aufweisen. Der zweite Innenraum könnte anstatt ausserhalb auch innerhalb des ersten Innenraumes angeordnet und von diesem umgeben sein. Es könnte z.B. im ersten Innenraum 23 eine schlangenförmige oder beliebig ausgestaltete Leitung vorgesehen sein, durch welche der zweite Luftstrom 50 hindurch strömt. Diese schlangenförmige Leitung würde dann das Wärmetauschelement bilden. Anstelle des zweiten Luftstroms 50 könnte mittels eines entsprechenden Steuerelements auch der erste Luftstrom 15 umgelenkt werden, um im zweiten Betriebszustand eine Übertragung von thermischer Energie zwischen dem ersten Luftstrom 15 und dem zweiten Luftstrom 50 zu verhindern. Es können ausserdem zusätzliche Luftfördermittel wie, insbesondere Ventilatoren, vorgesehen sein, um beispielsweise auch den zweiten Luftstrom 50 und/oder den Zusatzfrischluftstrom 52 voranzutreiben. Die verschiedenen Elemente der in den Figuren 1 bis 12b gezeigten Ausführungsformen können zudem selbstverständlich im Rahmen der Ansprüche beliebig miteinander kombiniert werden.

### BEZUGSZEICHENLISTE

| | | | |
|---|---|---|---|
| 1 | Kraftfahrzeug | 27 | Äussere Seitenwandung |
| 2 | Windschutzscheibe | 28 | Zweiter Innenraum |
| 3 | Motorhaube | 29 | Ablufteinlassöffnung |
| 4 | Fahrgastraum | 30 | Abluftauslassöffnung |
| 5 | Motorraum | 31 | Innenraum |
| 6 | Stirnwand | 32 | Fahrgastsitz |
| 7 | Klimagerät | 33 | Ablaufrohr |
| 8 | Ansaugleitung | 34 | Absperrklappe |
| 9 | Lufteinlassöffnung | 35 | Verbindungsöffnung |
| 10 | Wasserkasten | 36 | Absperrklappe |
| 11 | Gitter | 37 | Gitter |
| 12 | Einlasskanal | 38 | Verbindungsleitung |
| 13 | Innere Deckenwandung | 39 | Absperrklappe |
| 14 | Luftkanal | 40 | Wasseraustrittsöffnung |
| 15 | Luftstrom | 41 | Ablaufrohr |
| 16 | Umlenkelement | 42 | Verteilleitung |
| 17 | Wasseraustrittsöffnung | 43 | Absperrklappe |
| 18 | Ventilator | 44 | Gebläse |
| 19 | Äussere Deckenwandung | 45 | Isolation |
| 20 | Innere Bodenwandung | 46 | Reflektierende Folie |
| 21 | Innere Seitenwandung | 47 | Abluftklappe |
| 22 | Luftauslass | 48 | Abluftöffnung |
| 23 | Erster Innenraum | 49 | Gitter |
| 24 | Zuleitung | 50 | Luftstrom |
| 25 | Luftauslassöffnung | 51 | Steuereinheit |
| 26 | Äussere Bodenwandung | 52 | Zusatzfrischluftstrom |

## Patentansprüche

1. Kraftfahrzeug (1) aufweisend
einen Wasserkasten (10) mit einem ersten Innenraum (23) zum Abscheiden und Abführen von Wasser aus einem den ersten Innenraum (23) durchströmenden ersten Luftstrom (15), wobei der Wasserkasten (10) als Wärmetauscher ausgebildet ist mit einem Wärmetauschelement (13, 20, 21), welches zur Übertragung von thermischer Energie zwischen dem ersten Luftstrom (15) und einem zweiten Luftstrom (50) dient;
ein Klimagerät (7) zum Kühlen und/oder Erwärmen des ersten Luftstroms (15); sowie
zumindest eine Leitstruktur (8, 26, 27), welche dazu dient, den zweiten Luftstrom gezielt zum Wärmetauschelement (13, 20, 21) hin zu leiten;
**dadurch gekennzeichnet, dass**
zumindest ein Steuerelement (34) vorgesehen ist, mit welchem die Übertragung der thermischen Energie zwischen dem ersten Luftstrom (15) und dem zweiten Luftstrom (50) in einem ersten Betriebszustand ermöglicht und in einem zweiten Betriebszustand zumindest teilweise verhindert werden kann,
und dass ausserdem eine Verbindungsstruktur (35; 38) vorgesehen ist, um im zweiten Betriebszustand einen Zusatzfrischluftstrom (52) zum Klimagerät (7) hin zu leiten.

2. Kraftfahrzeug (1) nach Anspruch 1, wobei es sich beim Steuerelement um ein Absperrorgan, insbesondere eine Absperrklappe (34), handelt, mit welchem im zweiten Betriebszustand zumindest zum Teil verhindert werden kann, dass der zweite Luftstrom zum Wärmetauschelement (13, 20, 21) hin gelangt.

3. Kraftfahrzeug (1) nach Anspruch 1 oder 2, wobei eine Steuereinheit (51) vorgesehen ist, welche derart zur Ansteuerung des Steuerelements (34) ausgebildet ist, dass das Steuerelement (34) im ersten Betriebszustand die Übertragung der thermischen Energie zwischen dem ersten Luftstrom (15) und dem zweiten Luftstrom (50) ermöglicht und im zweiten Betriebszustand zumindest teilweise verhindert, wobei der erste Betriebszustand dann eingenommen wird, wenn eine in einem Fahrgastraum (4) des Kraftfahrzeugs (1) vorliegende Innentemperatur kleiner oder gleich gross wie eine ausserhalb des Kraftfahrzeugs (1) vorliegende Aussentemperatur ist, und der zweite Betriebszustand dann eingenommen wird, wenn die Innentemperatur höher als die Aussentemperatur ist.

4. Kraftfahrzeug (1) nach einem der vorhergehenden Ansprüche, wobei der Zusatzfrischluftstrom (52) ausserhalb des ersten Innenraums (23) mit dem Wärmetauschelement (13, 20, 21) in Kontakt kommt.

5. Kraftfahrzeug (1) nach einem der vorhergehenden Ansprüche, wobei zumindest ein Regelelement (36; 34), wie insbesondere eine Absperrklappe, vorgesehen ist, mit welchem wahlweise ermöglicht oder zumindest teilweise verhindert werden kann, dass der Zusatzfrischluftstrom (52) zum Klimagerät (7) gelangt.

6. Kraftfahrzeug (1) nach Anspruch 5, wobei das Steuerelement (34) gleichzeitig das Regelelement bildet.

7. Kraftfahrzeug (1) nach einem der vorhergehenden Ansprüche, wobei es sich bei der Verbindungsstruktur um eine in den ersten Innenraum (23) mündende Verbindungsöffnung (35) handelt.

8. Kraftfahrzeug (1) nach einem der vorhergehenden Ansprüche, wobei die Leitstruktur (8, 26, 27) zusammen mit dem Wärmetauschelement (13, 29, 21) einen zweiten Innenraum (28) begrenzt, durch welchen der zweite Luftstrom (50) im ersten Betriebszustand hindurchströmen kann.

9. Kraftfahrzeug (1) nach Anspruch 8, wobei eine Wasseraustrittsöffnung (40) vorgesehen ist, welche zum Abführen von Wasser aus dem zweiten Innenraum (28) dient.

10. Wasserkasten (10), für ein Kraftfahrzeug (1) nach einem der vorhergehenden Ansprüche, aufweisend
einen ersten Innenraum (23) zum Abscheiden und Abführen von Wasser aus einem den ersten Innenraum (23) durchströmenden ersten Luftstrom (15);
ein Wärmetauschelement (13, 20, 21), welches zur Übertragung von thermischer Energie zwischen dem ersten Luftstrom (15) und einem zweiten Luftstrom (50) dient; sowie
zumindest eine Leitstruktur (8, 26, 27), welche dazu dient, den zweiten Luftstrom (50) gezielt zum Wärmetauschelement (13, 20, 21) hinzuleiten;
**dadurch gekennzeichnet, dass**
der Wasserkasten (10) zumindest ein Steuerelement (34) aufweist, mit welchem die Übertragung der thermischen Energie zwischen dem ersten Luftstrom (15) und dem zweiten Luftstrom (50) in einem ersten Betriebszustand ermöglicht und in einem zweiten Betriebszustand zumindest teilweise verhindert werden kann,
und dass der Wasserkasten (10) ausserdem eine in den ersten Innenraum (23) mündende Verbindungsöffnung (35) aufweist, so dass im zweiten Betriebszustand ein Zusatzfrischluftstrom (52) in den ersten Innenraum (23) hinein geleitet werden kann.

11. Wasserkasten (10) nach Anspruch 10, zusätzlich aufweisend eine innere Wandung (13, 20, 21), welche den ersten Innenraum (23) begrenzt, sowie eine äussere Wandung (19, 26, 27), welche gemeinsam mit der inneren Wandung (13, 20, 21) einen zweiten Innenraum (28) begrenzt, durch welchen der zweite Luftstrom (50) im ersten Betriebszustand hindurchströmen kann.

12. Wasserkasten (10) nach Anspruch 11, wobei der zweite Innenraum (28) die innere Wandung (13, 20, 21) zu einem Grossteil umgibt.

13. Wasserkasten (10) nach einem der Ansprüche 10 bis 12, wobei eine Isolationsschicht (45) mit einer Wärmeleitfähigkeit von weniger als 0.1 W/mK bestimmt nach der Norm EN ISO 22007-2: 2008 und/oder eine wärmereflektierende Folie (46) mit einem Emissionskoeffizienten von weniger als 0.6, bestimmt nach der Norm VDI/VDE 3511-4: 1995, vorgesehen ist, welche den ersten Innenraum (23) zu einem Grossteil, insbesondere im Wesentlichen vollständig umgibt.

14. Verfahren zur Temperierung eines Kraftfahrzeugs (1) gemäss einem der Ansprüche 1 bis 9, mit einem Klimagerät (7) sowie mit einem Wasserkasten (10) gemäss einem der Ansprüche 10 bis 13, zum Abscheiden und Abführen von Wasser aus einem den Wasserkasten (10) durchströmenden ersten Luftstrom (15), wobei der Wasserkasten (10) als Wärmetauscher ausgebildet ist mit einem Wärmetauschelement (13, 20, 21), welches zur Übertragung von thermischer Energie zwischen dem ersten Luftstrom (15) und einem zweiten Luftstrom (50) dient,
wobei in einem ersten Betriebszustand der zweite Luftstrom (50) gezielt zum Wärmetauschelement (13, 20, 21) hin geleitet wird, um dadurch eine Übertragung der thermischen Energie zwischen dem ersten Luftstrom (15) und dem zweiten Luftstrom (50) zu ermöglichen,
wobei in einem zweiten Betriebszustand die Übertragung der thermischen Energie zwischen dem ersten Luftstrom (15) und dem zweiten Luftstrom (50) zumindest teilweise verhindert wird
und wobei im zweiten Betriebszustand zudem ein Zusatzfrischluftstrom (52) zum Klimagerät (7) hin geleitet wird.

15. Verfahren nach Anspruch 14, wobei der erste Betriebszustand dann eingenommen wird, wenn eine in einem Fahrgastraum (4) des Kraftfahrzeugs (1) vorliegende Innentemperatur kleiner oder gleich gross wie eine ausserhalb des Kraftfahrzeugs (1) vorliegende Aussentemperatur ist, und wobei der zweite Betriebszustand dann eingenommen wird, wenn die Innentemperatur höher als die Aussentemperatur ist.

## Claims

1. A motor vehicle (1), comprising
a water box (10) with a first inner chamber (23) for separating and removing water from a first air stream (15) flowing through the first inner chamber (23), wherein the water box (10) is designed as a heat exchanger and has a heat exchange element (13, 20, 21) which serves for transferring thermal energy between the first air stream (15) and a second air stream (50);
an air-conditioning unit (7) for cooling and/or heating the first air stream (15); and
at least one guide structure (8, 26, 27), which serves for guiding the second air stream to the heat exchange element (13, 20, 21) in a targeted manner;
**characterized in that**
at least one control element (34) is provided, by way of which the transfer of the thermal energy between the first air stream (15) and the second air stream (50) can be allowed in a first operating state and at least partially prevented in a second operating state,
and **in that** a connecting structure (35; 38) is also provided in order, in the second operating state, to guide an additional fresh-air stream (52) to the air-conditioning unit (7).

2. The motor vehicle (1) as claimed in claim 1, wherein the control element is a shut-off member, in particular a shut-off flap (34), by way of which, in the second operating state, it is possible to at least partly prevent the second air stream from passing to the heat exchange element (13, 20, 21).

3. The motor vehicle (1) as claimed in claim 1 or 2, wherein a control unit (51) is provided which is designed for controlling the control element (34) such that the control element (34) allows the transfer of the thermal energy between the first air stream (15) and the second air stream (50) in the first operating state and at least partially prevents it in the second operating state, wherein the first operating state is assumed when an interior temperature prevailing in a passenger compartment (4) of the motor vehicle (1) is lower than or the same as an exterior temperature prevailing outside the motor vehicle (1), and the second operating state is assumed when the interior temperature is higher than the exterior temperature.

4. The motor vehicle (1) as claimed in one of the preceding claims, wherein the additional fresh-air stream (52) comes into contact with the heat exchange element (13, 20, 21) outside the first inner chamber (23).

5. The motor vehicle (1) as claimed in one of the preceding claims, wherein at least one regulating element (36; 34), such as in particular a shut-off flap, is provided, by way of which the passage of the additional fresh-air stream (52) to the air-conditioning unit (7) can be selectively allowed or at least partially prevented.

6. The motor vehicle (1) as claimed in claim 5, wherein the control element (34) at the same time forms the regulating element.

7. The motor vehicle (1) as claimed in one of the preceding claims, wherein the connecting structure is a connecting opening (35) that opens out into the first inner chamber (23).

8. The motor vehicle (1) as claimed in one of the preceding claims, wherein the guide structure (8, 26, 27) delimits, together with the heat exchange element (13, 29, 21), a second inner chamber (28) through which the second air stream (50) is able to flow in the first operating state.

9. The motor vehicle (1) as claimed in claim 8, wherein a water outlet opening (40) is provided which serves for removing water from the second inner chamber (28).

10. A water box (10), for a motor vehicle (1) as claimed in one of the preceding claims, comprising
a first inner chamber (23) for separating and removing water from a first air stream (15) flowing through the first inner chamber (23);
a heat exchange element (13, 20, 21), which serves for transferring thermal energy between the first air stream (15) and a second air stream (50); and
at least one guide structure (8, 26, 27), which serves for guiding the second air stream (50) to the heat exchange element (13, 20, 21) in a targeted manner;
**characterized in that**
the water box (10) comprises at least one control element (34), by way of which the transfer of the thermal energy between the first air stream (15) and the second air stream (50) can be allowed in a first operating state and at least partially prevented in a second operating state,
and **in that** water box (10) additionally comprises a connecting opening (35) that opens out into the first inner chamber (23), such that, in the second operating state, an additional fresh-air stream (52) is able to be guided into the first inner chamber (23).

11. The water box (10) as claimed in claim 10, additionally comprising an inner wall (13, 20, 21) which delimits the first inner chamber (23), and an outer wall (19, 26, 27) which delimits, together with the inner wall (13, 20, 21), a second inner chamber (28) through which the second air stream (50) can flow in the first operating state.

12. The water box (10) as claimed in claim 11, wherein the second inner chamber (28) surrounds the inner wall (13, 20, 21) to a large extent.

13. The water box (10) as claimed in one of claims 10 to 12, wherein there is provided an insulation layer (45) having a thermal conductivity of less than 0.1 W/mK, determined according to the standard EN ISO 22007-2: 2008, and/or a heat-reflecting foil (46) having an emission coefficient of less than 0.6, determined according to the standard VDI/VDE 3511-4: 1995, which surrounds the first inner chamber (23) to a large extent, in particular substantially completely.

14. A method for controlling the temperature of a motor vehicle (1) as claimed in one of claims 1 to 9, having an air-conditioning unit (7) and a water box (10) as claimed in one of claims 10 to 13, for separating and removing water from a first air stream (15) flowing through the water box (10), wherein the water box (10) is designed as a heat exchanger and has a heat exchange element (13, 20, 21) which serves for transferring thermal energy between the first air stream (15) and a second air stream (50),
wherein, in a first operating state, the second air stream (50) is guided to the heat exchange element (13, 20, 21) in a targeted manner in order thereby to allow transfer of the thermal energy between the first air stream (15) and the second air stream (50),
wherein, in a second operating state, the transfer of the thermal energy between the first air stream (15) and the second air stream (50) is at least partially prevented,
and wherein, in the second operating state, an additional fresh-air stream (52) is also guided to the air-conditioning unit (7).

15. The method as claimed in claim 14, wherein the first operating state is assumed when an interior temperature prevailing in a passenger compartment (4) of the motor vehicle (1) is lower than or the same as an exterior temperature prevailing outside the motor vehicle (1), and wherein the second operating state is assumed when the interior temperature is higher than the exterior temperature.

## Revendications

1. Un véhicule automobile (1) présentant
une boîte à eau (10) comportant un premier espace intérieur (23) servant à la séparation et à l'évacuation de l'eau hors d'un premier flux d'air (15) traversant le premier espace intérieur (23), où la boîte à eau (10) est réalisée sous la forme d'un échangeur de chaleur comportant un élément d'échange de chaleur (13, 20, 21) qui sert au transfert d'énergie thermique entre le premier flux d'air (15) et un deuxième flux d'air (50) ;
un appareil de climatisation (7) servant à refroidir et/ou à chauffer le premier flux d'air (15) ; ainsi que
au moins une structure de guidage (8, 26, 27), qui sert à guider le deuxième flux d'air de façon ciblée vers l'élément d'échange de chaleur (13, 20, 21) ;
**caractérisé en ce que**
au moins un élément de commande (34) est prévu, avec lequel le transfert d'énergie thermique entre le premier flux d'air (15) et un deuxième flux d'air (50) peut être réalisé dans un premier état de fonctionnement et peut être empêché au moins partiellement dans un deuxième état de fonctionnement,
et que en outre une structure de connexion (35 ; 38) est prévue, pour guider un flux d'air supplémentaire (52) vers l'appareil de climatisation (7) dans le deuxième état de fonctionnement.

2. Le véhicule automobile (1) selon la revendication 1, où dans le cas de l'élément de commande il s'agit d'un organe de barrière, en particulier d'un vanne papillon (34), avec lequel il est possible d'empêcher au moins partiellement que le deuxième flux d'air atteint l'élément d'échange de chaleur (13, 20, 21) dans le deuxième état de fonctionnement.

3. Le véhicule automobile (1) selon la revendication 1 ou 2, où une unité de commande (51) est prévue, laquelle est réalisée pour la commande de l'élément de commande (34) de telle sorte que l'élément de commande (34) permet le transfert d'énergie thermique dans un premier état de fonctionnement (15) entre le premier flux d'air (50) et le deuxième flux d'air (50) et l'empêche au moins partiellement dans un deuxième état de fonctionnement, où le premier état de fonctionnement est occupé quand une température intérieure existant dans un habitacle (4) du véhicule automobile (1) est inférieure ou égale à une température extérieure existant en dehors du véhicule automobile (1), et que le deuxième état de fonctionnement est occupé quand la température intérieure est supérieure à la température extérieure.

4. Le véhicule automobile (1) selon une des revendications précédentes, où le flux d'air supplémentaire (52) vient en contact avec l'élément d'échange de chaleur (13, 20, 21) en dehors du premier espace intérieur (23).

5. Le véhicule automobile (1) selon une des revendications précédentes, où au moins un élément de réglage (36, 34), comme par exemple un vanne papillon, est prévu avec lequel il est éventuellement possible de permettre ou d'empêcher au moins partiellement que le flux d'air supplémentaire (52) atteint l'appareil de climatisation (7).

6. Le véhicule automobile (1) selon la revendication 5, où l'élément de commande (34) forme simultanément l'élément de réglage.

7. Le véhicule automobile (1) selon une des revendications précédentes, où dans le cas de la structure de connexion il s'agit d'une ouverture de connexion (35) s'ouvrant dans le premier espace intérieur (23).

8. Le véhicule automobile (1) selon une des revendications précédentes, où la structure de guidage (8, 26, 27) délimite ensemble avec l'élément d'échange de chaleur (13, 29, 21) un deuxième espace intérieur (28), à travers duquel le deuxième flux d'air (50) peut s'écouler dans le premier état de fonctionnement.

9. Le véhicule automobile (1) selon la revendication 8, où une ouverture de sortie d'eau (40) est prévue, laquelle sert à évacuer de l'eau hors du deuxième espace intérieur (28).

10. Boîte à eau (10) pour un véhicule automobile (1) selon une des revendications précédentes, présentant
- un premier espace intérieur (23) servant à la séparation et à l'évacuation de l'eau hors d'un premier flux d'air (15) traversant le premier espace intérieur (23);
- un élément d'échange de chaleur (13, 20, 21), lequel sert au transfert d'énergie thermique entre le premier flux d'air (15) et un deuxième flux d'air (50); et
ainsi que
au moins une structure de guidage (8, 26, 27), laquelle sert à guider le deuxième flux d'air (50) de façon ciblé vers l'élément d'échange de chaleur (13, 20, 21);
**caractérisé en ce que**
la boîte à eau (10) présente au moins un élément de commande (34), avec lequel le transfert d'énergie thermique entre le premier flux d'air (15) et le deuxième flux d'air (50) peut être réalisé dans un premier état de fonctionnement et peut être empêché au moins partiellement dans un deuxième état de fonctionnement,
et que la boîte à eau (10) présente en outre une ouverture de connexion (35) s'ouvrant dans le premier espace intérieur (23), de telle sorte que, dans un deuxième état de fonctionnement, un flux d'air supplémentaire (52) peut être guidé dans le premier espace intérieur (23).

11. La boîte à eau (10) selon la revendication 10, présentant en outre une paroi intérieure (13, 20, 21) laquelle délimite le premier espace intérieur (23) ainsi qu'une paroi extérieure (19, 26, 27), laquelle délimite ensemble avec la paroi intérieure (13, 20, 21) un deuxième espace intérieur (28), à travers duquel un deuxième flux d'air (50) peut s'écouler dans un premier état de fonctionnement.

12. La boîte à eau (10) selon la revendication 11, où le deuxième espace intérieur (28) entoure majoritairement la paroi intérieure (13, 20, 21).

13. La boîte à eau (10) selon une des revendications 10 à 12, où une couche d'isolation (45) ayant une conductivité thermique inférieure à 0,1 W / mK, comme déterminée selon la norme EN ISO 22007-2: 2008 et / ou un filme reflétant la chaleur (46) avec un coefficient d'émission inférieur à 0,6, comme déterminé selon la norme VDI / VDE 3511-4: 1995 est prévu(e), laquelle/lequel entoure majoritairement le premier espace intérieur (23), en particulier sensiblement entièrement.

14. Un procédé pour la régulation de la température d'un véhicule automobile (1) selon une des revendications 1 à 9, ayant une appareil de climatisation (7) ainsi qu'une boîte à eau (10) selon une des revendications 10 à 13, servant à la séparation et à l'évacuation de l'eau hors d'un premier flux d'air (15) traversant la boîte à eau (10), où la boîte à eau (10) est réalisée en tant qu'échangeur de chaleur ayant un élément d'échange de chaleur (13, 20, 21), lequel sert au transfert d'énergie thermique entre le premier flux (15) et un deuxième flux d'air (50),
où dans un premier état de fonctionnement, le deuxième flux d'air (50) est guidé de façon ciblée vers l'élément d'échange de chaleur (13, 20, 21), pour ainsi permettre un transfert d'énergie thermique entre le premier flux d'air (15) et le deuxième flux d'air (50),
où dans un deuxième état de fonctionnement, le transfert de l'énergie thermique entre le premier flux d'air (15) et le deuxième flux d'air (50) est au moins partiellement empêché,
et où dans un deuxième état de fonctionnement, en outre un flux d'air supplémentaire (52) est guidé vers l'appareil de climatisation (7).

15. Le procédé selon la revendication 14, où le premier état de fonctionnement est occupé quand une température intérieure existant dans un habitacle (4) du véhicule automobile (1) est inférieure ou égale à une température extérieure existant en dehors du véhicule automobile (1), et où le deuxième état de fonctionnement est occupé quand la température intérieure est supérieure à la température extérieure.
